# EUROPEAN PATENT APPLICATION

(11) **EP 2 497 576 A1**
(43) Date of publication of application: **12.09.2012**
(21) Application number: 10828326.8
(22) Date of filing: 04.11.2010
(51) Int. Cl.: B05B 13/04, B25J 5/02, B62D 65/00

(54) **COATING SYSTEM**

(30) Priority: 06.11.2009 JP 2009255003; 06.11.2009 JP 2009255006
(71) Applicant: Honda Motor Co., Ltd., Minato-ku Tokyo 107-8556 (JP); Kabushiki Kaisha Yaskawa Denki, Kitakyushu-shi, Fukuoka 806-0004 (JP)
(72) Inventor: TAKEBE, Masashi, Kitakyushu-shi Fukuoka 806-0004 (JP); TERAKADO, Shoji, Kitakyushu-shi Fukuoka 806-0004 (JP); SHIGA, Daizo, Kitakyushu-shi Fukuoka 806-0004 (JP); TAKAHASHI, Shingi, Kitakyushu-shi Fukuoka 806-0004 (JP)
(74) Representative: Rupp, Christian
(86) International application number: PCT/JP2010/069638
(87) International publication number: WO 2011/055766

(57) **Abstract**

A coating system is provided with a coating robot (14a to 14d) including a coating apparatus (38) configured to coat a coated object (12) structured by swingably connecting at least two members (18, 20) to a body (12), an opener robot (16) configured to swing said two members (18, 20) in a direction away from the body (12) at different timings, a first displacement mechanism (32) configured to displace the coating robot (14a to 14d) along a first guide member (28), and a second displacement mechanism (34) configured to displace the opener robot (16) along a second guide member (30), the opener robot (16) including a hooking member (48) which is hooked on the two members (18, 20) at the different timings. The first guide member (28) and the second guide member (30) are arranged in different heights so that the opener robot (16) and the coating robot (14a to 14d) are arranged in different heights. The first guide member (28) is configured to guide the coating robot (14a to 14d), and the second guide member (30) is configured to guide the opener robot (16).

## Description

### Technical Field:

The present invention relates to a coating system. More specifically, the present invention relates to a coating system which includes an opener robot for swinging a swingable part of a coated object.

### Background Art:

For example, in four-wheeled vehicles, various doors such as a cabin door, bonnet and trunk are swingably connected to a vehicle body in which a cabin is formed. In this state, the vehicle body is transferred to a coating process.

In the coating process, a coating robot sprays predetermined paint on the vehicle body transferred in a state of including the various doors, as disclosed in Patent Document 1, for example. Herein, since the part of the vehicle body on which the doors are attached must be coated, it is necessary to open the various doors, prior to spraying the paint (for example, see, FIG. 1 in Patent Document 2). In order words, the doors swing in a direction away from the vehicle body and at this state, a coating operation for the doors or the vehicle body is carried out.

The opening (swinging) of the door is carried out by a robot referred to as an opener robot, as disclosed in Patent Document 3. That is, a coating system for coating the four-wheeled vehicles includes a coating robot and an opener robot.

The coating robot and the opener robot can be respectively displaced under the action of a displacement mechanism. That is, the coating robot and the opener robot are separately displaced in response to the transfer of the vehicle body, that is, the displacement of the vehicle body.

FIG. 1 of Patent Document 1 illustrates a case where an opener robot for opening a cabin door and a coating robot for coating an inner side of the cabin door are guided by same guide rail. Further, FIG. 1 in Patent Document 3 illustrates a case where an opener robot for opening a bonnet or trunk and a coating robot for coating an inner side of the opened cabin door are arranged on same guide rail.

As such, in these prior arts, the coating robot and the opener robot are arranged on same guide rail. Accordingly, there is a constraint on the operation range of the coating robot and the opener robot. The reason is that it is impossible to displace the coating robot beyond the opener robot but also to displace the opener robot beyond the coating robot. When the coating robot and the opener robot simultaneously perform a coating operation in a state of being approached to each other, the coating robot and the opener robot are liable to be interfered with each other. In this case, it is difficult to place the coating robot in a posture suitable for a coating operation.

For this reason, an operation of the opener robot is completed in a state where the coating robot is in a standby state and then the coating robot is operated. However, in this case, although the coating robot can be easily placed in a posture suitable for a coating operation, there is a problem that the working efficiency of the coating robot is lowered. Further, a problem that the opener robot is contaminated by the sprayed paint or a problem that the paint is adhered to a door swung by the opener robot becomes obvious.

Further, in the prior art disclosed in Patent Document 3, two opener robots including an opener robot for swinging a bonnet and an opener robot for swinging a trunk are provided. The reason is that although it is necessary to swing the bonnet from a front side toward a rear side of the vehicle body for opening the bonnet while it is necessary to swing the trunk from a rear side toward a front side of the vehicle body for opening the trunk, there is not yet known an opener robot capable of opening all other doors of which swing direction are different. However, when a plurality of opener robot is employed, there is a problem of increasing plant investment.

Further, when the opener robot and the coating robot are arranged on same guide rail, there is a problem that the coating line becomes excessively long.

Furthermore, in the prior art disclosed in Patent Document 2, there is only one axis for folding up the arm part of the opener robot, that is, for making the arm part of the opener robot in a standby state. On this account, it is difficult to allow the arm part of the opener robot to be sufficiently spaced away from a coating region when a coating operation is performed. Therefore, there is a risk that the paint is adhered to the arm part and thus the arm part is contaminated.

Further, in order to avoid the contamination of the opener robot when the opener robot is displaced, there is a need for taking a sufficient spacing distance between the coated object and the opener robot by folding up (contracting) the arm part. However, in order to fold up the arm part without colliding with the coating robot arranged in a lower stage, it is necessary to increase a size of a coating booth for widening interior space.

### Prior Art Documents:

### Patent Documents:

Patent Document 1: JP-A-01-266870
Patent Document 2: JP-A-61-204060
Patent Document 3: WO2008/108401

### Summary of Invention:

One or more embodiments of the present invention provide a coating system capable of improving a working efficiency of both coating robot and opener robot, preventing the opener robot from being contaminated, and opening doors of which swing direction are different to each other.

According to one or more embodiments of the present invention, a coating system 10 is provided with a coating robot 14a to 14d including a coating apparatus 38 configured to coat a coated object 12 structured by swingably connecting at least two members 18, 20 to a body 12, an opener robot 16 configured to swing said two members 18, 20 in a direction away from the body 12 at different timings, a first displacement mechanism 32 configured to displace the coating robot 14a to 14d along a first guide member 28, and a second displacement mechanism 34 configured to displace the opener robot 16 along a second guide member 30, in which the opener robot 16 includes a hooking member 48 which is hooked on the two members 18, 20 at the different timings. The first guide member 28 and the second guide member 30 are arranged in different heights so that the opener robot 16 and the coating robot 14a to 14d are arranged in different heights. The first guide member 28 is configured to guide the coating robot 14a to 14d, and the second guide member 30 is configured to guide the opener robot 16.

According to this configuration, the interference between the opener robot and the coating robots during displacements thereof can be avoided. That is, it is possible to displace the opener robot and the coating robots without being restricted to the position of each other.

For this reason, for example, it is not necessary to maintain the coating robots in a standby state when the opener robot is displaced. That is, the coating robots can perform a coating operation for the bonnet, trunk or cabin doors when the opener robot is displaced. Thereby, it is possible to effectively improve the coating efficiency of the coating robots. Furthermore, since just one opener robot is required, there is an advantage of reducing plant investment.

In addition, since the opener robot and the coating robots are guided by separate guide member and provided in different heights, the interference therebetween can be avoided. Therefore, even while the opener robot is actuated, the coating robots are easily maintained in a posture suitable for a coating operation. Thereby, the working efficiency of the coating robots is improved, thereby contributing to improve the coating efficiency.

Further, since the paint is prevented from being adhered to the opener robot, it is possible to avoid contamination of the opener robot. In addition, it is also possible to prevent the paint from being wasted.

In the above configurations, the hooking member 48 may include a first claw part 54 and a second claw part 56. Also, one 56 of the first claw part 54 and the second claw part 56 may be configured to swing one 18 of the members 18, 20 in a direction away from the body 12 and the other one 54 of the first claw part 54 and the second claw part 56 may be configured to swing the other one 20 of the members 18, 20 in a direction away from the body 12.

According to the above configuration, the opening and closing operations of the bonnet and trunk can be carried out by single hooking member. Therefore, single opener robot can respond to both the bonnet and the trunk. This means that single opener robot is sufficient for the coating operation. Consequently, there is an advantage of reducing plant investment.

The hooking member may be swingably provided. In this case, since both the bonnet and the trunk can be separately swung just by a swinging action of the hooking member, there is no need for performing a detailed teaching for the opener robot. Furthermore, it is not necessary to provide a clamping jig on the vehicle body.

For example, the hook 48 may be formed in an approximately reverse T shape. Specifically, the hook may include a columnar part, the first claw part and the second claw part. The first claw part and the second claw part may be branched from a leading end of the columnar part to extend in opposite directions and extend in a direction substantially perpendicular to the extending direction of the columnar part. By these configurations, it is easy to swing the bonnet by one claw part and to swing the trunk by the other claw part. In this case, it is possible to sufficiently respond to even a case where the swinging direction of the bonnet and the swinging direction of the trunk are different from each other.

Further, according to one or more embodiments of the present invention, a coating system 10 is provided with a coating robot 14a to 14d including a coating apparatus 38 configured to coat a coated object 12 structured by swingably connecting a plurality of members 18, 20 to a body 12, an opener robot 16 configured to swing the members 18, 20 in a direction away from the body 12, a first displacement mechanism 32 configured to displace the coating robot 14a to 14d, and a second displacement mechanism 34 configured to displace the opener robot 16. The opener robot 16 includes at least three arm members 42, 43, 44 which are swingably provided on an attaching base 41. The three arm members 42, 43, 44 have three rotating axes D1, D2, D3 parallel to each other.

According to the above configuration, it is possible to operate the opener robot to swing a predetermined member in a state where the coating robots take a posture suitable for a coating operation. The interference between the opener robot and the coating robots can be avoided by suitably swinging the arm members of the opener robot.

Accordingly, it is not necessary to maintain the coating robots in a standby state while the opener robot is operated. Thereby, the working efficiency of the coating robots can be improved and thus a coating operation for the coated object can be effectively carried out.

In the above configurations, the three arm members may consist of a first arm member 42, a second arm member 43 and a third arm member 44. The second arm member 43 may have a base end connected to the first arm member 42 and a leading end connected to the third arm member 44. Further, the second arm member 43 may be positioned on one side of the first arm member 42 in a direction parallel to the rotating axes D1, D2, D3 and the third arm member 44 may be positioned on the other side of the second arm member 43 in the direction parallel to the rotating axes D1, D2, D3. In this case, it is possible to narrow the occupying space of the arm part in both the standby state and the operating state. Therefore, the mounting space of the opener robot can be narrowed. And, it is also possible to reduce the distance from a base end of the opener robot to the coated object when the opener robot is operating. In this way, since the displacement distance of the opener robot is shortened, it is possible to shorten the mounting length of a guide member for guiding the opener robot when the opener robot is displacing. Furthermore, there is no need for increasing a size of a coating booth in order to widen interior space.

Meanwhile, the three arm members may consist of a first arm member 42, a second arm member 43 and a third arm member 44. The second arm member 43 may have a base end connected to the first arm member 42 and a leading end connected to the third arm member 44. Further, the second arm member 43 may be positioned on one side of the first arm member 42 in a direction parallel to the rotating axes D1, D2, D3 and the third arm member 44 may be positioned on the one side of the second arm member 43 in the direction parallel to the rotating axes D1, D2, D3. In this case, since the arm members are subsequently spaced apart from the coated object, there is an advantage of easily preventing the opener robot from being contaminated by the paint.

In the above configuration, the rotating axis of the first arm member and the attaching base and the rotating axis of the second arm member and the third arm member may be located on a substantially same straight line or on a substantially same plane.

By such a configuration, the opener robot can overtake the coating robots even while the coating robots are operating. That is, it is not necessary to maintain the coating robots in a standby state when the opener robot is displaced. In addition, it is also possible to prevent the opener robot from being contaminated by the paint.

### Brief Description of Drawings:

FIG. 1 is a schematic perspective view illustrating a main part of a coating station according to an exemplary embodiment.
FIG. 2A is a schematic perspective view illustrating a main part of an opener robot.
FIG. 2B is a schematic view illustrating a main part of the opener robot constituting the coating system.
FIG. 3A is a schematic side view illustrating a main part of the coating in a state where a second claw part of a hook of the opener robot is hooked in a bonnet and swinging the bonnet to an open state.
FIG. 3B is a schematic perspective view illustrating a main part of the hook provided on a leading end of an arm part of the opener robot.
FIG. 3C is a schematic upper plan view illustrating a state where the second claw part of the hook is hooked in the bonnet.
FIG. 4 is a schematic side view illustrating a main part of the coating system in a state where a first claw part of the hook is close to a trunk.
FIG. 5 is a schematic perspective view illustrating a main part of the coating system in a state where the arm part of the opener robot is stretched and expanded.
FIG. 6 is a schematic side view illustrating a main part of the coating system in a state where a bonnet and trunk of another kind of vehicle is swung to an open state by the hook.
FIG. 7 is a schematic side view illustrating a main part of the coating system in a state where a bonnet and trunk coupled to a vehicle body is swung to an open state by the hook illustrated in FIGS. 3 and 4.
FIG. 8 is a schematic perspective view illustrating a main part of the opener robot in a state where first to third arm members are sequentially coupled to an outer side thereof.
FIG. 9 is a schematic perspective view illustrating a main part of the opener robot in a state where an arm part constituting the opener robot illustrated in FIG. 7 is stretched and expanded.
FIG. 10 is a schematic perspective view illustrating a main part of the coating system in a case where the coating system is constituted by a 5-axis robot illustrated in FIGS. 6 and 7.
FIG. 11 is a schematic perspective view illustrating a main part of another opener robot.

### Description of Embodiments:

Hereinafter, an exemplary embodiment of a coating system according to the present invention will be described in detail by referring to the accompanying drawings.

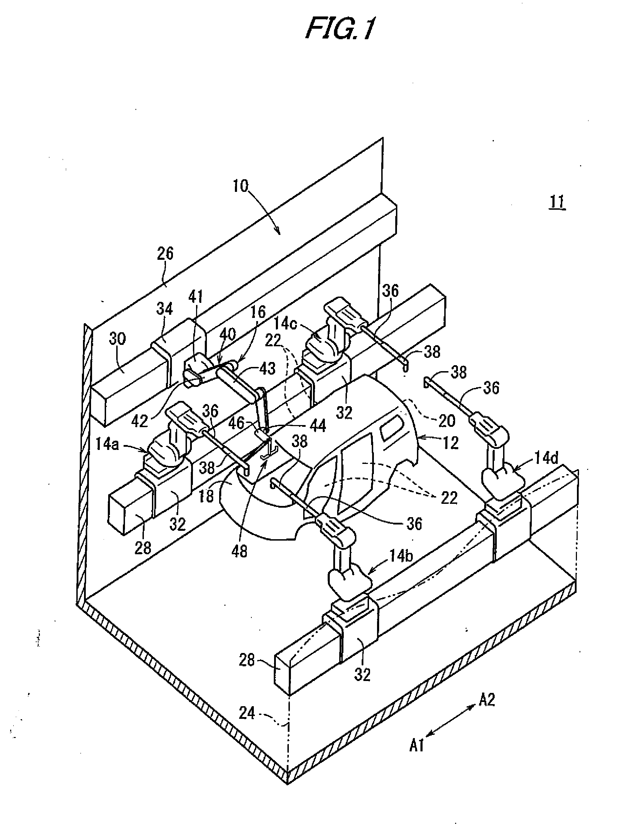

FIG. 1 is a schematic partial perspective view illustrating a coating station 11 in which a coating system 10 according to the exemplary embodiment is provided. In this case, the coating system 10 is configured to coat a vehicle body 12 (a coated object) of a four-wheeled vehicle and includes four coating robots 14a to 14d and one opener robot 16.

In advance, a bonnet 18, trunk 20 and four sheets of cabin door 22 are swingably coupled to the vehicle body 12. These openable elements 18, 20 and 22 are in a closed state until opened by the opener robot 16.

The vehicle body 12 is conveyed at a relatively low speed in an arrow A1 direction in FIG. 1 by a conveyor (not illustrated). In order words, the vehicle body 12 is slowly displaced in the arrow A1 direction.

The coating system 10 extends in the arrows A1 and A2 direction, is partitioned by two walls 24 and 26 opposed to each other and is placed in the coating station 11 formed by the walls. And, first guide rails 28 are laid on a lower portion of each of the walls 24 and 26 and a second guide rail 30 is laid on an upper portion of the wall 26. The first guide rails 28 and the second guide rail 30 are respectively provided on the walls 24 and 26 and the wall 26 to extend parallel to the extending direction of the conveyor. That is, the first guide rails 28 and the second guide rail 30 are disposed parallel to a conveying direction of the vehicle body 12.

As such, since the first guide rails 28 are laid on the lower portion of the walls 24 and 26 and the second guide rail 30 is laid on the upper portion of the wall 26, there is a height difference between the coating robots 14a to 14 and the opener robot 16. That is, the opener robot 16 is placed at a position higher than the coating robots 14a to 14.

Moving carriages 32 equipped with each of the coating robots 14a to 14d are movably engaged with the first guide rails 28 while a moving carriage 34 equipped with the opener robot 16 is movably engaged with the second guide rail 30. These moving carriages 32, 34 are electrically connected to a control circuit (not illustrated) and are displaced in the arrow A1 direction or the arrow A2 direction while being guided by the first guide rails 28 or the second guide rail 30 under the action of the control unit. That is, the moving carriages 32 and the control circuit constitute a first displacement mechanism for displacing the coating robots 14a to 14d, and the moving carriage 34 and the control circuit constitute a second displacement mechanism for displacing the opener robot 16.

As the coating robots 14a to 14d, for example, a conventional multi-jointed articulated robot such as a 6-axis robot is employed. Coating guns 38 are respectively arranged on the leading ends of arm parts 36 of the coating robots 14a to 14d and spray mist paint on the vehicle body 12.

An opening/closing jig (not illustrated) for swinging any one of four cabin doors 22 relative to the vehicle body 12 is provided on each of the coating robots 14a to 14d. That is, the cabin door 22 is swung by the coating robots 14a to 14d and therefore opened and closed.

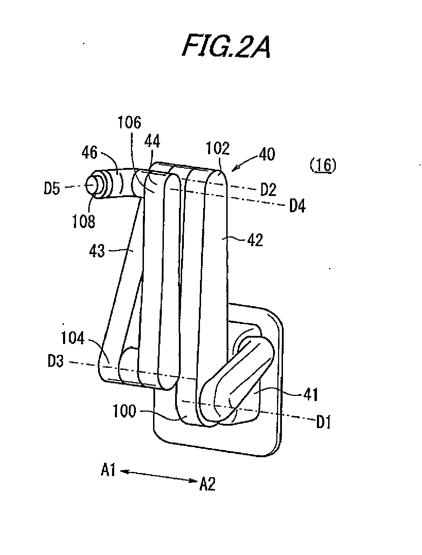

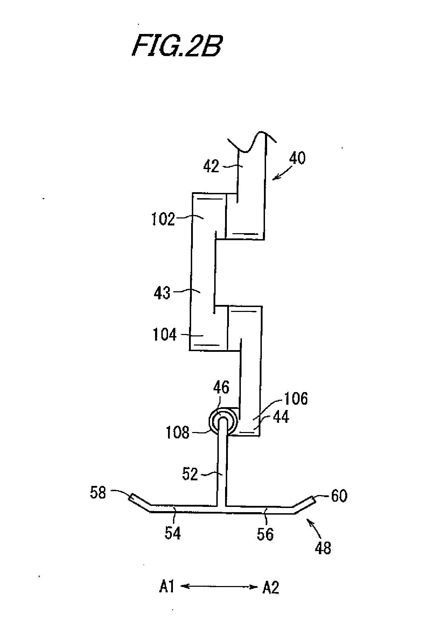

Meanwhile, as illustrated in FIGS. 2A and 2B, an arm part 40 of the opener robot 16 includes a first arm member 42, a second arm member 43 and a third arm member 44 in this order from an attaching base 41 close to the moving carriage 34 to a leading end. Naturally, these arm members 42, 43, 44 can be individually rotated and stopped in a state of being tilted at a predetermined angle.

Specifically, a first articulated part 100 is provided between the attaching base 41 and the first arm member 42, a second articulated part 102 is provided between the first arm member 42 and the second arm member 43, a third articulated part 104 is provided between the second arm member 43 and the third arm member 44, a fourth articulated part 106 is between the third arm member 44 and a nut 46 (which will described later), and a fifth articulated part 108 is provided between the nut 46 and a hook 48. The first arm member 42, the second arm member 43, the third arm member 44, the nut 46 and the hook 48 can be rotated around rotating axes D1 to D4 extending in a horizontal direction by the first articulated part 100, the second articulated part 102, the third articulated part 104, the fourth articulated part 106 and the fifth articulated part 108.

Herein, the first arm member 42, the second arm member 43 and the third arm member 44 are connected at one end thereof to each other via the rotating axes so that these arm members 42, 43, 44 forms a helical shape. (That is, the second arm member 43 has a base end connected to the first arm member 42 and a leading end connected to the third arm member 44. Further, the second arm member 43 is positioned on one side (on a left side in FIG. 2A) of the first arm member 42 in a direction parallel to the rotating axes D1-D4 and the third arm member 44 is positioned on the other side (on a right side in FIG. 2A) of the second arm member 43 in the direction parallel to the rotating axes D1-D4.) Therefore, when the opener robot 16 is in a standby posture, the third arm member 44 is accommodated between the first arm member 42 and the second arm member 43. At this time, the first articulated part 100 and the third articulated part 104 approach to each other so that the axis D1 and the axis D4 are substantially coplanar to each other. Further, when the opener robot 16 is disposed over the coating robots 14a to 14d, the axes D1, D3 are arranged below the axes D2, D4. Thereby, it is possible to prevent the arm part 40, especially, the second arm member 43 from being interfered with the coating robots 14a to 14d.

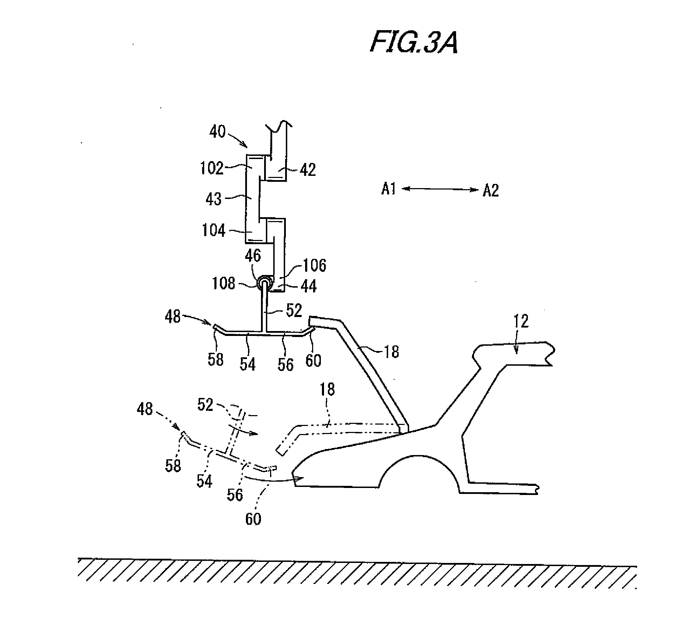

The nut 46 extending in same direction as the extending direction of the third arm member 44 is connected to the third arm member 44. As illustrated in FIG. 1, the hook 48 as a hooking member is attached to the nut 46 so as to be oriented in a direction substantially perpendicular to the extending direction of the nut 46. That is, a columnar part 52 (see, FIG. 3A) constituting the hook 48 is connected to the fifth articulated part 108 via the nut 46 and thus rotates in accordance with the rotation of the fifth articulated part 108.

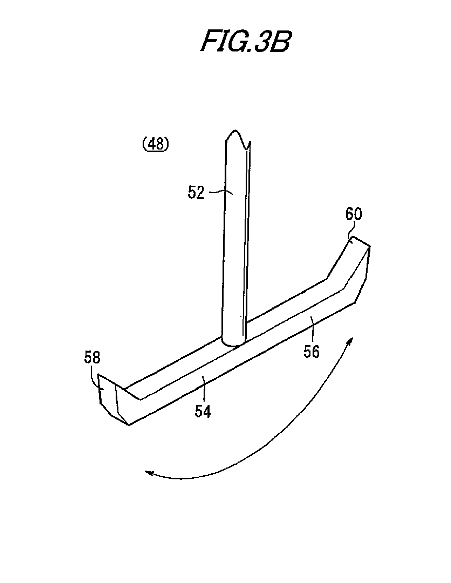

As illustrated in FIGS. 3A and 3B, the hook 48 has an approximately reverse T shape. Specifically, the hook 48 includes a first claw part 54 and a second claw part 56 which are branched from a leading end of the columnar part 52 to extend in opposite directions. The first claw part 54 and the second claw part 56 extend in a direction substantially perpendicular to the extending direction of the columnar part 52.

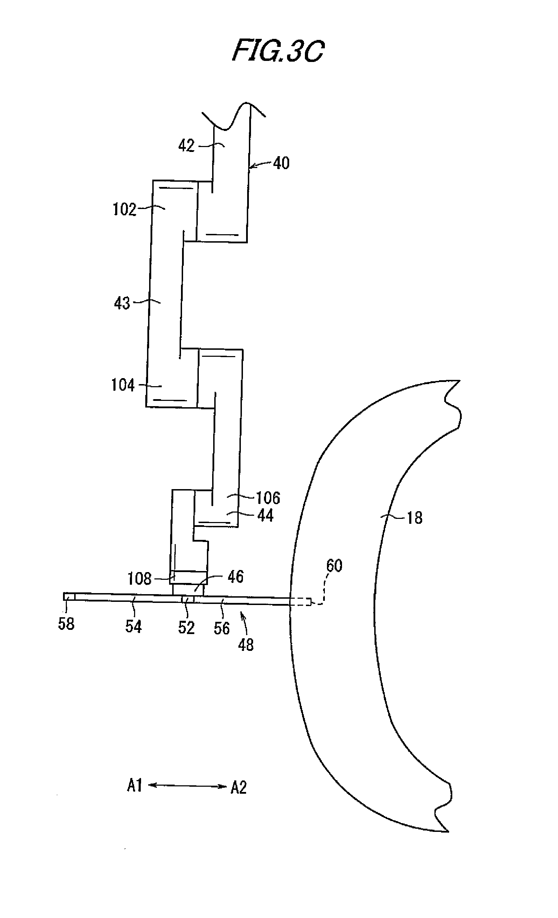

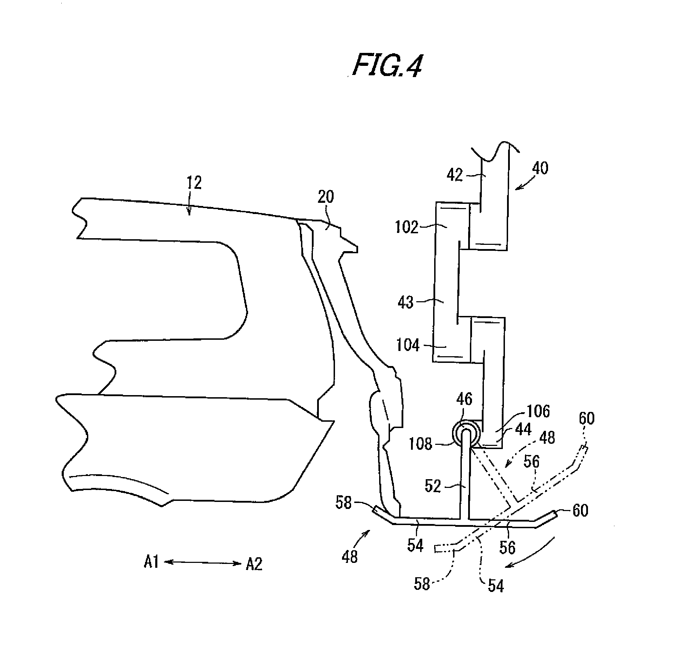

The first claw part 54 and a second claw part 56 are respectively provided at leading ends thereof with a first hooking portion 58 and a second hooking portion 60 which protrude toward the columnar part 52. As described later, the second hooking portion 60 of the second claw part 56 is hooked on the bonnet 18 to cause the bonnet to be swung to an opened state (see, FIGS. 3A, 3B and 3C) while the first hooking portion 58 of the first claw part 54 is hooked on the trunk 20 to cause the trunk to be swung to an opened state (see, FIG. 4). That is, the hook 48 is swung in an arrow direction in FIGS. 3A and 4, due to a rotating operation of the fifth articulated part 108 around the axis D5 in a predetermined angle. The above operation will be described in detail later.

Basically, the coating system 10 according to the exemplary embodiment is configured as mentioned above. Hereinafter, the effect of the coating system will be described.

As the vehicle body 12 to which various openable elements 18, 20 and 22 are connected is transferred via the conveyor, the opener robot 16 is first operated to open the bonnet 18 in a closed state.

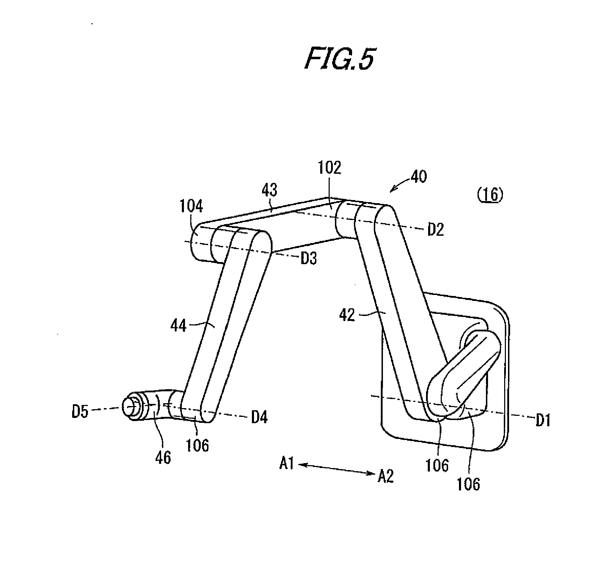

Specifically, the opener robot 16 is operated from a standby state illustrated in FIG. 2A and displaced (in an arrow A1 direction) toward the bonnet 18 while being guided by the second guide rail 30. Further, as illustrated in FIG. 5, as the first arm member 42, the second arm member 43 and the third arm member 44 are subjected to a predetermined rotating operation, the arm part 40 is stretched and expanded. In this way, the second hooking portion 60 of the hook 48 approaches the bonnet 18 in a closed state. At this time, the arm part 40 is arranged such that the second arm member 43 is spaced apart from the bonnet 18 than the first arm member 42 and the third arm member 44. At this time, the hook 48 is positioned such that the second claw part 56 is spaced apart from the bonnet 18, as illustrated by an imaginary line in FIG. 3A.

At this state, the fifth articulated part 108 rotates and therefore the hook 48 swings toward the bonnet 18 in a predetermined angle. As a result, as illustrated in FIGS. 3A and 3C, the second hooking portion 60 of the second claw part 56 is hooked on the bonnet 18.

In this way, the second hooking portion 60 can be hooked on the bonnet 18 while being prevented from interfering with any other member or portion, in response to a swing operation of the hook 48.

After it is detected by a proximity sensor (not illustrated) that the second hooking portion 60 of the second claw part 56 is hooked on the bonnet 18, the arm part 40 of the opener robot 16 performs a predetermined operation and therefore the bonnet 18 swings in a direction spaced apart from the vehicle body 12, as illustrated by a solid line in FIG. 3A. That is, the bonnet 18 is opened.

In this state, two coating robots 14a, 14b (see, FIG. 1) which are located close to the front of the vehicle body 12 are actuated to spray paint on the bonnet 18. That is, a coating operation for the bonnet 18 is performed by two coating robots 14a, 14b.

On the other hand, two coating robots 14c, 14d which are located close to the rear of the vehicle body 12 are actuated and two front cabin doors 22 are swung to an opened state by the opening/closing jig. Further, the coating robots 14c, 14d spray the paint on the two front cabin doors 22 in the opened state.

As described above, in the exemplary embodiment, the coating robots 14a to 14d and the opener robot 16 are arranged in different heights (see, FIG. 1). Further, since the coating robots 14a to 14d and the opener robot 16 are separately guided, there are no constraints on the displacement of each other. Accordingly, the interference between the coating robots 14a to 14d and the opener robot 16 supporting the bonnet 18 in the opened state can be avoided. In this way, the coating robots 14a to 14d can easily take a posture suitable for a coating operation. In this posture, the coating gun 38 approaches the first claw part 54 of the hook 48. That is, the paint is sprayed from the side of the first claw part 54 toward the vehicle body 12.

For this reason, it is not necessary to maintain the coating robots 14a to 14d in a standby state. Accordingly, it is possible to improve the working efficiency of the coating robots 14a to 14d and to effectively coat the vehicle body 12.

Further, since the coating robots 14a to 14d and the opener robot 16 are arranged in different heights, it is possible to prevent the paint from being adhered to the opener robot 16 during coating. Accordingly, it is possible to avoid contamination of the opener robot 16 by the paint. As a result, it is also possible to prevent the paint from being adhered to the vehicle body 12 via the opener robot 16.

While the coating operation is carried out in this way, the vehicle body 12 is slowly transferred in an arrow A1 direction in FIGS. 1, 2B, 3A and 3C. That is, the vehicle body is slowly displaced. Following to the displacement of the vehicle body, the coating robots 14a to 14d and the opener robot 16 are displaced in a speed corresponding to the displacing speed of the vehicle body 12 under the control of the control circuit. Of course, the displacement is carried out via the moving carriages 32, 34.

After the coating operation for the bonnet 18 is completed, the arm part 40 performs a predetermined operation to swing the bonnet 18 toward the vehicle body 12, thereby making the bonnet 18 to a closed state. In this state, as the fifth articulated part 108 of the opener robot 16 rotates, the columnar part 52 of the hook 48 is rotated by a predetermined angle. Thereby, the second hooking portion 60 of the second claw part 56, consequently, the hook 48 is detached from the bonnet 18. Further, the arm part 40 is in a storage condition.

On the other hand, a coating operation for two front cabin doors 22 is completed. The coating robots 14c, 14d cause the opening/closing jig to swing the cabin doors 22 toward the vehicle body 12, thereby making the cabin doors to a closed state.

Thereafter, the coating robots 14a to 14d and the opener robot 16 are rapidly displaced to return back in an arrow A2 direction by a predetermined distance. This displacement is also carried out via the moving carriages 32, 34 under the control action of the control unit. During this displacement, for example, the opener robot 16 may overtake the coating robots 14c, 14d.

In the exemplary embodiment, the third arm member 44 of the opener robot 16 stretches between the first arm member 42 and the second arm member 43. Therefore, the spacing distance between the vehicle body 12 and the opener robot 16 becomes small and thus it is possible to reduce the dimension of the second guide rail 30 in a longitudinal direction. Further, since the opener robot 16 is compact in both expansion and contraction states, it is also possible to narrow installing space thereof.

The opener robot 16 returns back to a predetermined position and the arm part 40 thereof stretches again to open the trunk 20. Herein, the second arm member 43 in a state where the arm part 40 stretches and the trunk 20 in a closed state are parallel to each other. Accordingly, when the third arm member 44 is located close to the trunk 20, as compared to the second arm member 43, there is a risk that the third arm member 44 is interfered with the trunk 20. However, in this exemplary embodiment, as illustrated in FIG. 4, the first arm member 42 and the third arm member 44 are spaced apart from the trunk 20 than the second arm member 43 when the trunk 20 is going to an opened state. Therefore, it is possible to effectively avoid the third arm member 44 interfering with the trunk 20.

Simultaneously, the first hooking portion 58 of the first claw part 54 of the hook 48 approaches the trunk 20. Even in this case, the first claw part 54 and the second claw part 56 are slightly slanted relative to the arrow A1, A2 directions in a predetermined angle, similar to FIG. 3.

And, similar to the above case, the fifth articulated part 108 performs a predetermined rotating operation. Following to this rotating operation, the hook 48 is rotated by a predetermined angle and therefore the first hooking portion 58 is hooked on the trunk 20 in the closed state.

After it is detected by a proximity sensor (not illustrated) that the first hooking portion 58 of the first claw part 54 is hooked on the trunk 20, the arm part 40 of the opener robot 16 performs a predetermined operation. As a result, the trunk 20 swings in a direction spaced apart from the vehicle body 12, and the trunk 20 is opened, as illustrated by a solid line in FIG. 4.

As is understood from the foregoing description, in the exemplary embodiment, the hook 48 includes the first claw part 54 and the second claw part 56 which extend in opposite directions. Accordingly, just one opener robot 16 can be utilized to open both the bonnet 18 and the trunk 20.

In contrast, in a case of a hook having only one claw part, it is possible to open a door which can be hooked by the claw part and swung, but it is difficult to open the other doors. The reason is that it is difficult to hook the claw part of the hook on the trunk 20 when the hook is oriented toward a rear side of the vehicle body 12 and it is difficult to hook the claw part of the hook on the bonnet 18 when the hook is oriented toward a front side of the vehicle body 12.

The rear coating robots 14c, 14d spray the paint on the trunk 20 in an opened state. On the other hand, the front coating robots 14a, 14b cause the opening/closing jig to swing two rear cabin doors 22 to an opened state and then spray the paint on the two cabin doors 22.

Naturally, even in this case, the interference between the coating robots 14a to 14d and the opener robot 16 supporting the trunk 20 in the opened state can be avoided, similar to the above case. Accordingly, the coating robots 14a to 14d can easily take a posture suitable for a coating operation. In this posture, the coating gun 38 approaches the first claw part 54 of the hook 48, thereby spraying the paint from the side of the first claw part 54 toward the vehicle body 12.

For this reason, since it is not necessary to maintain the coating robots 14a to 14d in a standby state, it is possible to improve the working efficiency of the coating robots 14a to 14d. That is, a coating operation for the vehicle body 12 can be effectively performed.

Further, it is possible to avoid contamination of the opener robot 16 by the paint and it is also possible to prevent the paint from being adhered to the vehicle body 12 via the opener robot 16.

Furthermore, in this process, the first arm member 42 and the third arm member 44 are arranged at a position spaced apart from the trunk 20 than the second arm member 43. Accordingly, even when the trunk 20 is swinging by approximately 90°, the interference between the trunk 20 and the first arm member 42 and between the trunk 20 and the third arm member 44 can be avoided.

Even while the coating operation is carried out, the vehicle body 12 is slowly transferred in the arrow A1 direction in FIGS. 1 and 4 and the coating robots 14a to 14d and the opener robot 16 are displaced in a speed corresponding to the transfer speed of the vehicle body 14.

And, when a coating operation for the trunk 20 and the rear cabin doors 22 is completed, the arm part 40 of the opener robot 16 carries out a predetermined operation to swing the trunk 20 to a closed state where the trunk 20 is seated on the vehicle body 12. In addition, the coating robots 14a, 14b cause the opening/closing jig to swing the rear cabin doors 22 to a closed state where the cabin doors 22 are seated on the vehicle body 12. Thereafter, the vehicle body 12 is taken out from the coating station 11.

Subsequently, the arm part 40 of the opener robot 16 can open the bonnet 18 of the vehicle body 12 which is transferred to the coating station 11, while maintaining the posture used for swinging the trunk 20 to the closed state as before. That is, it is not especially required to contract/expand the arm part 40 in accordance with the replacement of the vehicle body 12.

As is understood from the foregoing description, according to the exemplary embodiment, after a coating operation for a preceding vehicle body 12 is completed, a coating operation for next vehicle body 12 can be rapidly started. Accordingly, a coating efficiency per unit of time can be improved.

In the above operations, a case of rotating the fifth articulated part 108 and thus swinging the hook 48 in order to open the trunk 20 and the bonnet 18 is illustratively explained. However, for example, it is also possible to open the trunk 20 and the bonnet 18 by rotating the fourth articulated part 106, thereby inserting the hook 48 into the trunk 20 and the bonnet 18 from a direction transverse to a moving direction of the vehicle body 12 and then rotating the fifth articulated part 108.

Herein, the opener robot 16 may respond to doors of which swing direction are different.

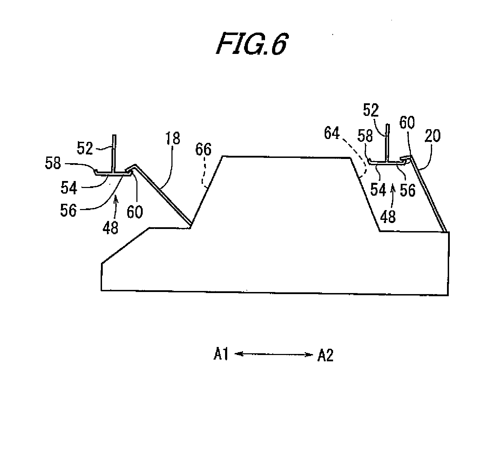

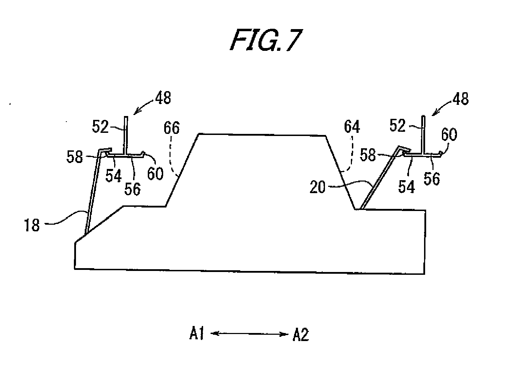

For example, there is a car where the trunk 20 can be opened in such a manner of swinging from a rear window 64 toward the rear side of the vehicle body 12, as illustrated in FIG. 6 or there is a car where the bonnet 18 can be opened in such a manner of swinging from a front window 66 toward the front side of the vehicle body 12, as illustrated in FIG. 7. As is easily understood from FIGS. 6 and 7, the opener robot 16 including the hook 48 mentioned above can respond to these cars.

As mentioned above, according to the exemplary embodiment, just one opener robot 16 can be utilized to open a plurality of doors of which swing directions are different.

Furthermore, since just one opener robot 16 is provided, there is an advantage of reducing plant investment.

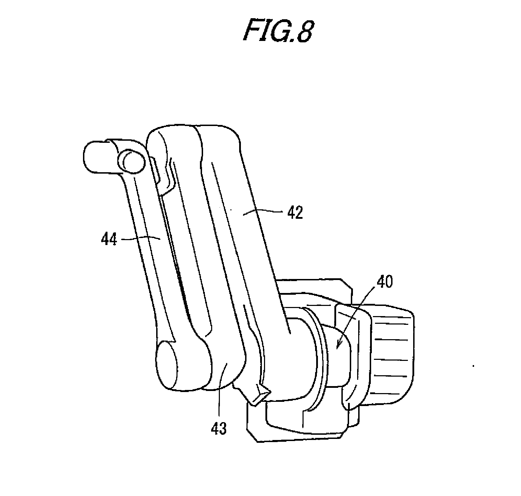

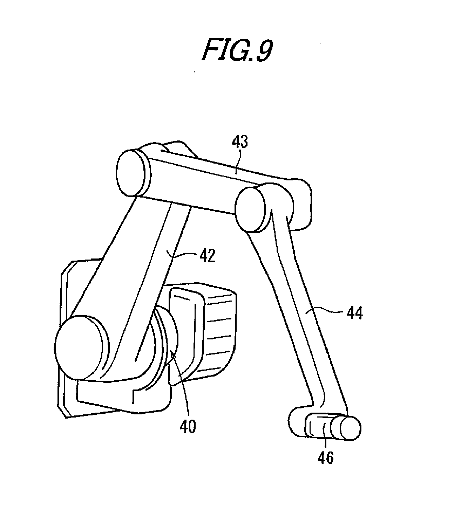

As illustrated in FIGS. 8 and 9, the arm part 40 of the opener robot 16 may be configured by sequentially connecting the first arm member 42, the second arm member 43 and the third arm member 44 toward the outside. (That is, the second arm member 43 has a base end connected to the first arm member 42 and a leading end connected to the third arm member 44. Further, the second arm member 43 is positioned on one side (on a left side in FIG. 8) of the first arm member 42 in a direction parallel to the rotating axes D1-D4 and the third arm member 44 is positioned on the one side (on a left side in FIG. 8) of the second arm member 43 in the direction parallel to the rotating axes D1-D4.)

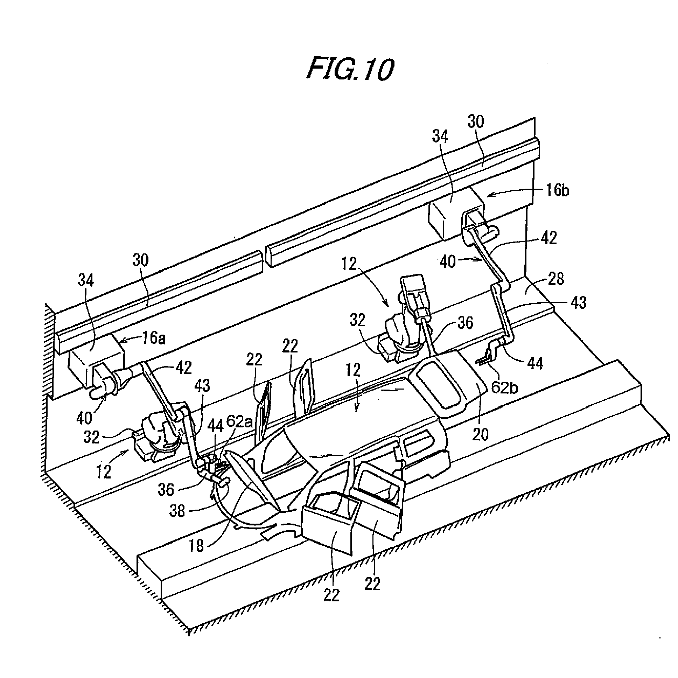

In this case, when the hook 62 is arranged on a predetermined position of the vehicle body 12, the base ends of the opener robots 16a, 16b are largely spaced apart from the vehicle body 12, as illustrated in FIG. 10. Further, a spacing distance of the arm part 40 relative to the vehicle body 12 becomes large. Accordingly, there is an advantage that the opener robots 16a, 16b are less contaminated by the paint. Herein, FIG. 10 illustrates only a left side portion of the coating station.

In above FIG. 10, the hooks 62 having only one claw part are adhered to the opener robots 16a, 16b. In this case, although it is possible to open a door which can be hooked by the claw part and swung, it is difficult to open the other doors. For example, although the hook 62a of the opener robot 16a can open the bonnet 18, it is difficult to open the trunk 20. Further, although the hook 62b of the opener robot 16b can open the trunk 20, it is difficult to open the bonnet 18. The reason is that it is difficult to hook the claw part of the hook 62a orienting toward a rear side of the vehicle body 12 on the trunk 20 or to hook the claw part of the hook 62b orienting toward a front side of the vehicle body 12 on the bonnet 18.

Accordingly, in this case, two opener robots 16a, 16b may be provided to solve the above difficulty.

Although the vehicle body 12 of a vehicle is illustrated as an example of a coated object in the above exemplary embodiment, the coated object is not particularly limited to the vehicle body. The present invention may be applied to an object in which a predetermined member is swingably connected to a main body.

Further, the coating robots 14a to 14d and the opener robot 16 may have an arbitrary arrangement. For example, as mentioned above, the opener robot 16 is arranged in a displaceable manner on the wall 24 or the wall 26 via the moving carriage 34 while the coating robots 14a to 14d are arranged in a displaceable manner on the floor of the coating station 11 via the moving carriage 32. Alternatively, the opener robot 16 may be arranged on the floor of the coating station 11 via the moving carriage 34 while the coating robots 14a to 14d may be arranged on the walls 24, 26 via the moving carriage 32.

Further, the opener robot 16 may be the robot as illustrated in FIGS. 8 and 9. That is, the coating system having a configuration as illustrated in FIG. 10 is also included in the present invention.

Further, the hook 48 may be provided with three or more claw parts.

Further, the fourth articulated part 106 may be non-rotated (in other words, fixed).

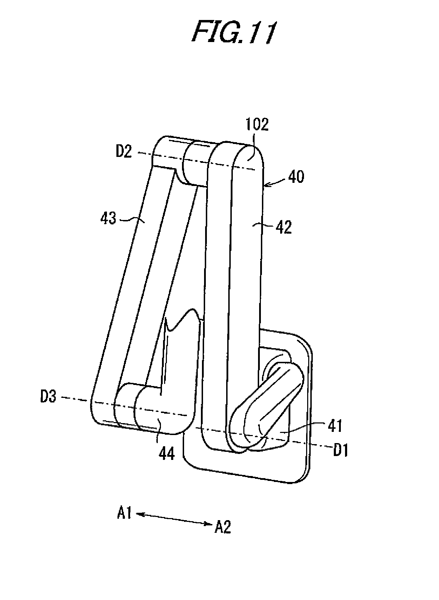

And, as illustrated in FIG. 11, the third arm member 44 may be inserted between the first arm member 42 and the second arm member 43. In this case, the axis D1 and the axis D3 are located on the same straight line.

### Description of Reference Numerals:

- 10···: Coating system
- 11···: Coating station
- 12···: Vehicle body
- 14a to 14d···: Coating robot
- 16, 16a, 16b···: Opener robot
- 18···: Bonnet
- 20···: Trunk
- 22···: Cabin door
- 24, 26···: Wall
- 28, 30···: Guide rail
- 32, 34···: Moving carriage
- 38···: Coating gun (Coating apparatus)
- 40···: Arm part
- 41···: Attaching base
- 42, 43, 44···: Arm member
- 48, 62···: Hook
- 52···: Columnar part
- 54, 56···: Claw part
- 58, 60···: Hooking portion

## Claims

1. A coating system comprising:
a coating robot (14a to 14d) including a coating apparatus (38) configured to coat a coated object (12) structured by swingably connecting at least two members (18, 20) to a body (12);
an opener robot (16) configured to swing said two members (18, 20) in a direction away from the body (12) at different timings;
a first displacement mechanism (32) configured to displace the coating robot (14a to 14d) along a first guide member (28); and
a second displacement mechanism (34) configured to displace the opener robot (16) along a second guide member (30), wherein the opener robot (16) includes a hooking member (48) which is hooked on the two members (18, 20) at the different timings,
wherein the first guide member (28) and the second guide member (30) are arranged in different heights so that the opener robot (16) and the coating robot (14a to 14d) are arranged in different heights, and
wherein the first guide member (28) is configured to guide the coating robot (14a to 14d), and the second guide member (30) is configured to guide the opener robot (16).

2. The coating system according to claim 1, wherein the hooking member (48) includes a first claw part (54) and a second claw part (56),
wherein one (56) of the first claw part (54) and the second claw part (56) is configured to swing one (18) of said two members (18, 20) in a direction away from the body (12), and
the other (54) of the first claw part (54) and the second claw part (56) is configured to swing the other (20) of said two members (18, 20) in a direction away from the body (12).

3. The coating system according to claim 2, wherein the hooking member (48) is configured such that the one (56) of the first claw part (54) and the second claw part (56) is capable of hooking to the one (18) of said two members (18, 20) and the other (54) of the first claw part (54) and the second claw part (56) is capable of hooking to the other (20) of said two members (18, 20).

4. The coating system according to claim 2 or 3, wherein the hooking member (48) has a reverse-T shape including a columnar part (52), said first claw part (54) extending from a leading end of the columnar part (52) in a direction substantially perpendicular to an extending direction of the columnar part (52), and said second claw part (56) extending from the leading end of the columnar part (52) in a direction substantially perpendicular to the extending direction of the columnar part (52) and opposite to the direction of the first claw part (54).

5. The coating system according to any one of claims 1 to 4, wherein the first guide member (28) and the second guide member (30) are arranged to be parallel to a conveying direction of the coated object (12).

6. A coating system comprising:
a coating robot (14a to 14d) including a coating apparatus (38) configured to coat a coated object (12) structured by swingably connecting a plurality of members (18, 20) to a body (12);
an opener robot (16) configured to swing the members (18, 20) in a direction away from the body (12);
a first displacement mechanism (32) configured to displace the coating robot (14a to 14d); and
a second displacement mechanism (34) configured to displace the opener robot (16),
wherein the opener robot (16) includes at least three arm members (42, 43, 44) which are swingably provided on an attaching base (41), and
wherein the three arm members (42, 43, 44) have three rotating axes (D1, D2, D3) parallel to each other.

7. The coating system according to claim 6, wherein the three arm members includes a first arm member (42), a second arm member (43) and a third arm member (44),
wherein the second arm member (43) includes a base end connected to the first arm member (42) and a leading end connected to the third arm member (44),
wherein the second arm member (43) is positioned on one side of the first arm member (42) in a direction parallel to the rotating axes (D1, D2, D3), and
wherein the third arm member (44) is positioned on the other side of the second arm member (43) in the direction parallel to the rotating axes (D1, D2, D3).

8. The coating system according to claim 6, wherein the three arm members includes a first arm member (42), a second arm member (43) and a third arm member (44),
wherein the second arm member (43) includes a base end connected to the first arm member (42) and a leading end connected to the third arm member (44),
wherein the second arm member (43) is positioned on one side of the first arm member (42) in a direction parallel to the rotating axes (D1, D2, D3), and
wherein the third arm member (44) is positioned on said one side of the second arm member (43) in the direction parallel to the rotating axes (D1, D2, D3).

9. The coating system according to claim 6, wherein the three arm members includes a first arm member (42), a second arm member (43) and a third arm member (44), and
wherein the rotating axis (D1) of the first arm member (42) and the attaching base (41) and the rotating axis (D3) of the second arm member (43) and the third arm member (44) are located on a substantially same straight line or on a substantially same plane.

10. The coating system according to any one of claims 6 to 9, further comprising:
a first guide member (28) and a second guide member (30),
wherein the coating robot (14a to 14d) is configured to be displaced along the first guide member (28) by the first displacement mechanism (32);
wherein the opener robot (16) is configured to be displaced along the second guide member (30) by the second displacement mechanism (34), and
wherein the first guide member (28) and the second guide member (30) are arranged in different heights so that the opener robot (16) and the coating robot (14a to 14d) are arranged in different heights.

11. The coating system according to any one of claims 6 to 10, wherein the opener robot (16) and the coating robot (14a to 14d) are configured to be displaced in a direction parallel to a conveying direction of the coated object (12).
